# FASCICULE DE BREVET EUROPEEN

(11) **EP 0 752 943 B1**
(45) Date de publication et mention de la délivrance du brevet: **27.05.1998**
(21) Numéro de dépôt: 95913208.5
(22) Date de dépôt: 17.03.1995
(51) Int. Cl.: B60T 11/34, B60T 8/18

(54) **CORRECTEUR DE FREINAGE A CLAPET DOUBLE**
BREMSDRUCKREDUZIERVENTIL MIT DOPPELKUGELVENTIL
DUAL VALVE BRAKING CORRECTOR

(30) Priorité: 19.04.1994 FR 9404624
(43) Date de publication de la demande: 15.01.1997
(73) Titulaire: BOSCH SISTEMAS DE FRENADO, S.L., 28037 Madrid (ES)
(72) Inventeur: BACARDIT SIMON, Juan AlliedSignal Europe Services, F-93700 Drancy (FR)
(74) Mandataire: Bentz, Jean-Paul
(86) Numéro de dépôt international: FR9500322
(87) Numéro de publication internationale: WO9528308

(56) Documents cités:
- EP-A- 0 335 764
- EP-A- 0 461 420

## Description

La présente invention concerne un correcteur de freinage, destiné à être interposé entre une source de pression hydraulique et un circuit de freinage de véhicule automobile, et comportant un boîtier pourvu d'au moins un alésage; un piston hydraulique coulissant dans cet alésage et y délimitant des première et seconde chambres de pression séparées l'une de l'autre par des moyens de clapet portés par ce piston, les première et seconde chambres étant susceptibles d'être respectivement reliées à la source de pression et au circuit de freinage; et un poussoir agissant sur les moyens de clapet dans un sens propre à en permettre l'ouverture lorsqu'une pression relativement basse règne dans la seconde chambre, le piston coulissant dans l'alésage, sous l'effet d'une élévation de pression dans cette seconde chambre, dans un sens propre à éloigner du poussoir les moyens de clapet et en permettre corrélativement la fermeture, ces moyens de clapet comprenant une première bille de diamètre prédéterminé, sollicitée par un premier ressort en direction à la fois du poussoir et d'un premier siège formé à l'intérieur du piston.

Des correcteurs de ce type sont connus dans l'art antérieur, tel qu'illustré par exemple par les documents de brevets US 4 615 566, US 4 624 507, et EP 0 223 641.

L'un des problèmes rencontrés dans la réalisation des correcteurs de ce type réside dans le fait que le liquide de freinage se trouve fréquemment pollué par des impuretés de toute sorte, qui peuvent s'opposer à la fermeture du clapet et l'empêcher par conséquent de remplir sa fonction.

Bien qu'il soit connu, pour résoudre ce problème, d'interposer des filtres sur le trajet du liquide de freinage, cette solution reste peu satisfaisante dans la mesure où les filtres piègent aisément des quantités d'air assez importantes, qui perturbent elles-mêmes le fonctionnement correct du circuit hydraulique de freinage.

Par ailleurs, l'opération d'un correcteur de freinage s'accompagne généralement d'un bruit perceptible, que les constructeurs de véhicules automobiles cherchent à éliminer.

Dans ce contexte, l'invention a pour but de proposer un correcteur silencieux et robuste, capable de fonctionner sans défaillance, même en l'absence de filtre pour le liquide de freinage.

A cette fin, le correcteur de l'invention est essentiellement caractérisé en ce que les moyens de clapet comprennent une seconde bille interposée entre la première bille et le poussoir, coopérant avec un second siège formé à l'intérieur du piston, et sollicitée par un second ressort en direction à la fois du poussoir et du second siège, cette seconde bille étant écartée du second siège par le poussoir et écartant elle-même la première bille du premier siège lorsqu'une pression relativement basse règne dans la seconde chambre, et la distance séparant les deux billes, lorsqu'elles sont appliquées sur leurs sièges respectifs, étant inférieure à la course de coulissement possible du piston dans l'alésage.

Selon le mode de réalisation le plus simple de l'invention, le second ressort est comprimé entre les deux billes et les deux ressorts présentent des raideurs différentes, la raideur du second ressort étant inférieure à celle du premier, et la seconde bille présente un diamètre inférieur au diamètre de la première bille.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue générale en coupe d'un correcteur conforme à l'invention;
- la figure 2 est une vue de détail agrandie d'une partie de la figure 1, représentant le piston dans une première position;
- la figure 3 est une vue de détail agrandie d'une partie de la figure 1, représentant le piston dans une seconde position;
- la figure 4 est une vue de détail agrandie d'une partie de la figure 1, représentant le piston dans une troisième position;
- la figure 5 est une vue de détail agrandie d'une partie de la figure 1, représentant un second mode de réalisation possible du piston; et
- la figure 6 est une vue de détail agrandie d'une partie de la figure 1, représentant un troisième mode de réalisation possible du piston.

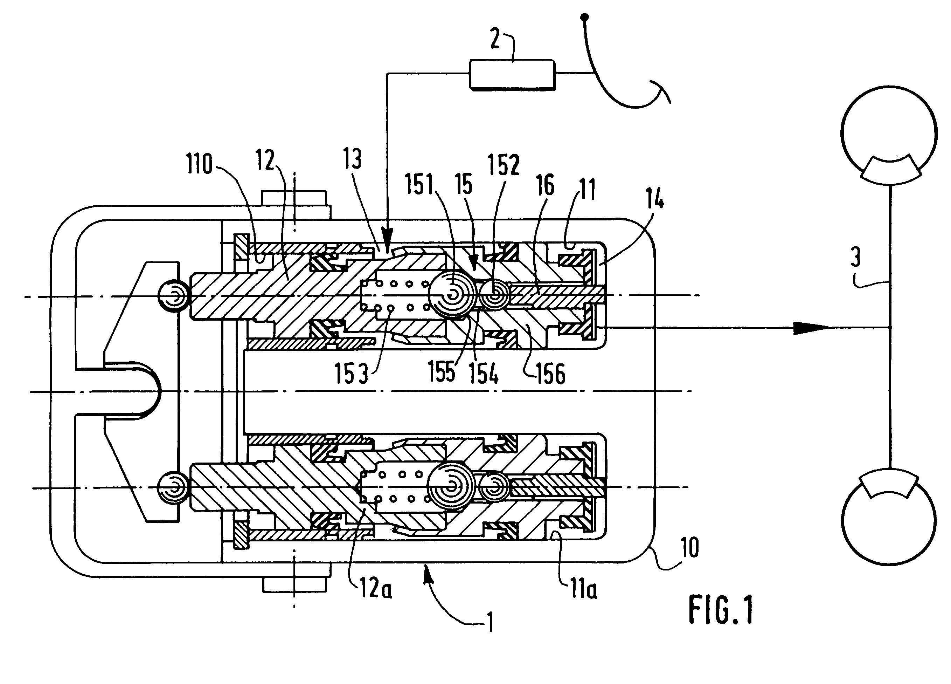

Comme le montre la figure 1, l'invention concerne un correcteur de freinage 1, destiné à être interposé entre une source de pression hydraulique, telle qu'un maître-cylindre 2, et le circuit de freinage arrière 3 d'un véhicule automobile, de manière à fournir à ce circuit de freinage 3 une pression égale à la pression de sortie de la source de pression pour les faibles valeurs de cette pression, et une pression inférieure à celle de la source pour les valeurs plus élevées de cette dernière.

Ce correcteur comprend, de façon classique, un boîtier 10 pourvu d'au moins un alésage 11, un piston hydraulique 12 coulissant dans cet alésage et y délimitant des première et seconde chambres de pression 13 et 14 séparées l'une de l'autre par des moyens de clapet 15 portés par ce piston 12.

Dans le mode de réalisation représenté à la figure 1, le correcteur comprend en fait deux alésages 11 et 11a, les composants logés dans l'alésage 11a étant totalement homologues de ceux qui sont logés dans l'alésage 11 et repérés par le même numéro de référence, à l'indice "a" près.

En fonctionnement, les première et seconde chambres 13, 14 sont respectivement reliées à la source de pression 2 et au circuit de freinage 3.

Un poussoir 16 lié au boîtier 1 agit sur les moyens de clapet 15 dans un sens propre à en permettre l'ouverture lorsqu'une pression relativement basse règne dans la seconde chambre 14 et le piston 12 coulisse dans l'alésage 11, sous l'effet d'une élévation de pression dans cette seconde chambre 14, dans un sens propre à éloigner du poussoir 16 les moyens de clapet 15 et en permettre corrélativement la fermeture.

A cette fin, selon une conception classique, le piston 11 est par exemple un piston différentiel présentant, dans la première chambre 13 du côté opposé à la seconde 14, une section de pression définie par un alésage 110 et inférieure à celle de l'alésage 11.

Comme le montrent les figures, les moyens de clapet 15 comprennent une première bille 151 de diamètre prédéterminé, sollicitée par un premier ressort 153 en direction à la fois du poussoir 16 et d'un premier siège 155 formé à l'intérieur du piston.

Ces moyens de clapet comprennent par ailleurs une seconde bille 152, qui sur les figures 1 à 4 est représentée avec un diamètre inférieur au diamètre de la première bille 151, qui est interposée entre cette première bille 151 et le poussoir 16, qui coopère avec un second siège 156 formé à l'intérieur du piston, et et qui est sollicitée par un second ressort 154 en direction à la fois du poussoir 16 et du second siège 156.

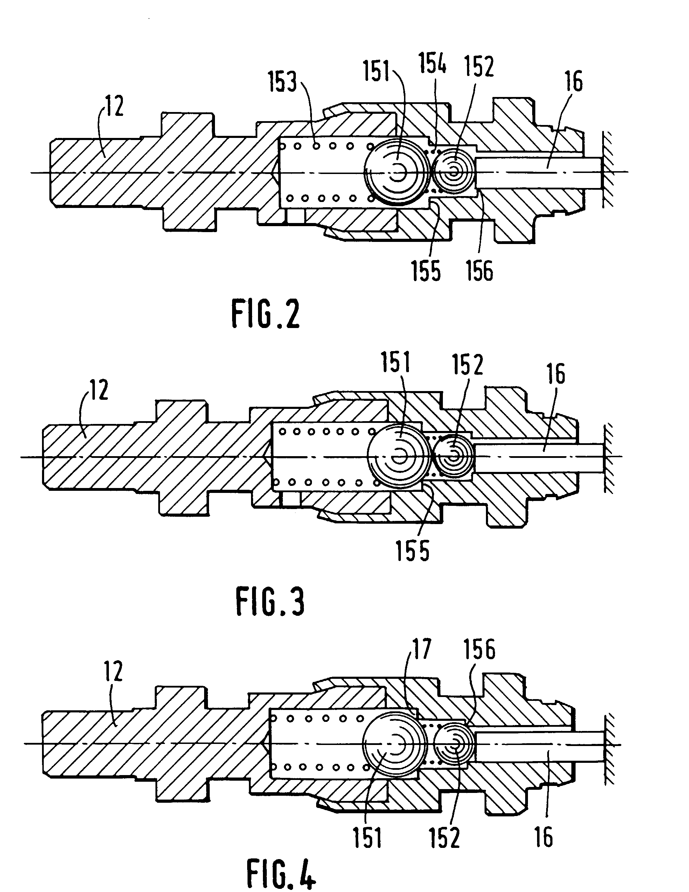

La figure 2 représente la position adoptée par les moyens de clapet 15 relativement au poussoir 16 lorsqu'une pression relativement basse règne dans la seconde chambre 14, et montre que la seconde bille 152 est alors écartée du second siège 156 par le poussoir 16 et qu'elle écarte elle-même la première bille 151 du premier siège 155.

La figure 3 représente la position adoptée par les moyens de clapet 15 relativement au poussoir 16 lorsque la pression régnant dans la seconde chambre 14 a augmenté suffisamment, en raison d'une augmentation de pression dans la première chambre 13, pour que la première bille 151 vienne obturer le premier siège 155.

Sur cette figure, il est possible de voir que la seconde bille 152 n'est pas quant à elle nécessairement appliquée sur son siège 156.

Si l'obturation réalisée par la première bille 151 est imparfaite, par exemple en raison de la présence d'une impureté 17 sur le premier siège 155, le liquide de freinage présent dans la première chambre continue à migrer dans la seconde chambre et à augmenter la pression dans cette dernière.

Dans ce cas, comme le montre la figure 4, le piston 12 continue à se déplacer par rapport au poussoir 16 jusqu'à ce que la seconde bille 152 vienne obturer le second siège 156, cette figure permettant de voir que la distance séparant les deux billes, lorsque celles-ci sont appliquées sur leurs sièges respectifs, est inférieure à la course de coulissement effectuée par le piston dans l'alésage entre sa position de repos illustrée sur la figure 2 et sa position extrême illustrée sur la figure 4.

Comme le montrent les figures 2 à 6, le second ressort 154 est de préférence comprimé entre les deux billes 151 et 152, le second ressort devant alors présenter une raideur inférieure à celle du premier ressort 153 pour que les première et seconde billes viennent en application sur leur siège dans l'ordre souhaité et illustré par les figures.

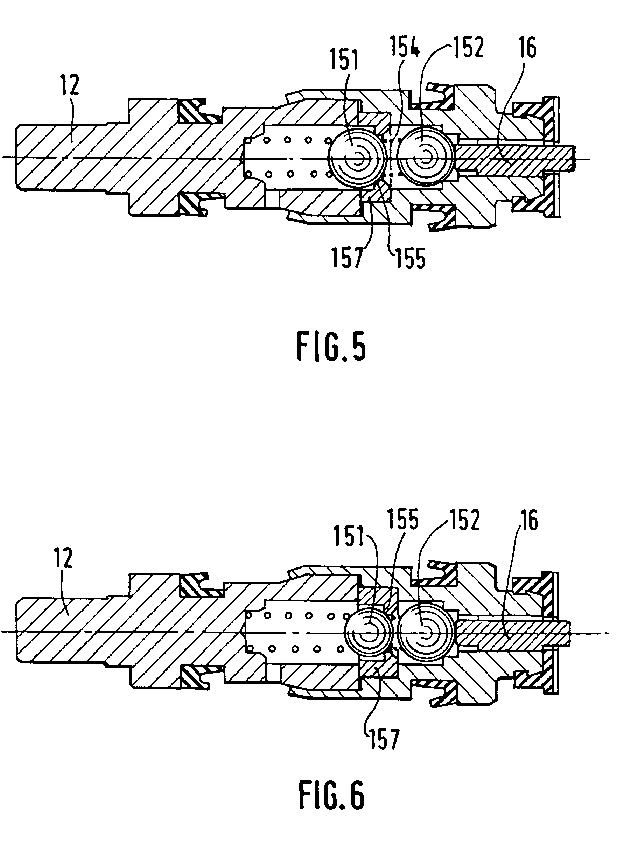

Les figures 5 et 6 montrent qu'il est également possible de donner à la seconde bille 152 le même diamètre que celui de la première bille (figure 5), voire un diamètre supérieur (figure 6), ces modes de réalisation nécessitant cependant l'ajout d'une pièce supplémentaire 157 portant le siège 155 de la première bille 151.

En dehors de l'augmentation de faibilité qui résulte de l'utilisation de la seconde bille, la présence de cette dernière divise la différence de pression, existant entre les première et seconde chambres de pression 13 et 14, en une première chute de pression provoquée par la première bille 151 et son siège 155, et en une seconde chute de pression provoquée par la seconde bille 152 et son siège 156.

Or, l'expérience a montré que cet effet conduisait à une régularisation du débit de liquide de freinage entre les première et seconde chambres de pression, dont résulte un fonctionnement beaucoup plus silencieux du correcteur.

## Revendications

1. Correcteur de freinage, destiné à être interposé entre une source de pression hydraulique (2) et un circuit de freinage (3) de véhicule automobile, et comportant : un boîtier (10) pourvu d'au moins un alésage (11); un piston hydraulique (12) coulissant dans cet alésage et y délimitant des première (13) et seconde chambres (14) de pression séparées l'une de l'autre par des moyens de clapet (15) portés par ce piston, les première et seconde chambres étant susceptibles d'être respectivement reliées à la source de pression et au circuit de freinage; et un poussoir (16) agissant sur les moyens de clapet dans un sens propre à en permettre l'ouverture lorsqu'une pression relativement basse règne dans la seconde chambre, le piston coulissant dans l'alésage, sous l'effet d'une élévation de pression dans cette seconde chambre, dans un sens propre à éloigner du poussoir les moyens de clapet et en permettre corrélativement la fermeture, ces moyens de clapet comprenant une première bille (151) de diamètre prédéterminé, sollicitée par un premier ressort (153) en direction à la fois du poussoir et d'un premier siège (155) formé à l'intérieur du piston, caractérisé en ce que les moyens de clapet comprennent une seconde bille (152) interposée entre la première bille et le poussoir, coopérant avec un second siège (156) formé à l'intérieur du piston, et sollicitée par un second ressort (154) en direction à la fois du poussoir et du second siège, cette seconde bille étant écartée du second siège par le poussoir et écartant elle-même la première bille du premier siège lorsqu'une pression relativement basse règne dans la seconde chambre, et la distance séparant les deux billes, lorsqu'elles sont appliquées sur leurs sièges respectifs, étant inférieure à la course de coulissement possible du piston dans l'alésage.

2. Correcteur de freinage suivant la revendication 1, caractérisé en ce que le second ressort (154) est comprimé entre les deux billes et en ce que les deux ressorts présentent des raideurs différentes, la raideur du second ressort (154) étant inférieure à celle du premier (153).

3. Correcteur de freinage suivant la revendication 1 ou 2, caractérisé en ce que la seconde bille (152) présente un diamètre inférieur au diamètre de la première bille (151).

## Patentansprüche

1. Bremskraftregler, der dafür vorgesehen ist, zwischen einer Hydraulikdruckquelle (2) und einem Kraftfahrzeug-Bremskreis (3) angeordnet zu werden, mit: einem Gehäuse (10), das mit wenigstens einer Bohrung (11) versehen ist; einem Hydraulikkolben (12), der in dieser Bohrung gleitet und dort eine erste Druckkammer (13) und eine zweite Druckkammer (14) abgrenzt, die voneinander durch von diesem Kolben getragene Ventilmittel (15) getrennt sind, wobei die erste und die zweite Kammer mit der Druckquelle bzw. dem Bremskreis verbunden werden können; und einem Stößel (16), der auf die Ventilmittel in einer Richtung einwirkt, die geeignet ist, diesem das Öffnen zu ermöglichen, wenn in der zweiten Kammer ein relativ niedriger Druck herrscht, wobei der Kolben in der Bohrung unter der Wirkung eines Druckanstiegs in dieser zweiten Kammer in einer Richtung gleitet, die geeignet ist, den Stößel von den Ventilmitteln zu entfernen und entsprechend diesen das Schließen zu ermöglichen, wobei die Ventilmittel eine erste Kugel (151) mit vorbestimmtem Durchmesser enthalten, die von einer ersten Feder (153) in Richtung sowohl des Stößels als auch eines im Inneren des Kolbens gebildeten ersten Sitzes (155) beaufschlagt wird, dadurch gekennzeichnet, daß die Ventilmittel eine zweite Kugel (152) enthalten, die zwischen der ersten Kugel und dem Stößel angeordnet ist, mit einem im Inneren des Kolbens gebildeten zweiten Sitz (156) zusammenwirkt und von einer zweiten Feder (154) in Richtung sowohl des Stößels als auch des zweiten Sitzes beaufschlagt wird, wobei diese zweite Kugel von dem zweiten Sitz mittels des Stößels entfernt wird und ihrerseits die erste Kugel von dem ersten Sitz entfernt, wenn in der zweiten Kammer ein relativ niedriger Druck herrscht, wobei der die beiden Kugeln trennende Abstand, wenn diese an ihre entsprechenden Sitze angelegt sind, kleiner als der mögliche Verstellweg des Kolbens in der Bohrung ist.

2. Bremskraftregler nach Anspruch 1, dadurch gekennzeichnet, daß die zweite Feder (154) zwischen den beiden Kugeln zusammengedrückt ist und daß die beiden Federn unterschiedliche Steifigkeiten haben, wobei die Steifigkeit der zweiten Feder (154) geringer als diejenige der ersten Feder (153) ist.

3. Bremskraftregler nach Anspruch 1 oder Anspruch 2, dadurch gekennzeichnet, daß die zweite Kugel (152) einen Durchmesser hat, der kleiner als der Durchmesser der ersten Kugel (151) ist.

## Claims

1. Brake regulator, intended to be interposed between a source of hydraulic pressure (2) and a braking circuit (3) of a motor vehicle and including: a casing (10) provided with at least one bore (11); a hydraulic piston (12) sliding in this bore and therein delimiting first (13) and second (14) pressure chambers separated from one another by valve means (15) carried by this piston, the first and second chambers being capable of being connected respectively to the source of pressure and to the braking circuit; and a push rod (16) acting on the valve means in a direction capable of allowing the opening thereof when a relatively low pressure prevails in the second chamber, the piston sliding in the bore, under the action of an increase in pressure in this second chamber, in a direction capable of moving the push rod away from the valve means and correspondingly allowing closure thereof, these valve means comprising a first ball (151) of predetermined diameter, urged by a first spring (153) in the direction both of the push rod and of a first seat (155) formed inside the piston, characterized in that the valve means comprise a second ball (152) interposed between the first ball and the push rod, interacting with a second seat (156) formed inside the piston, and urged by a second spring (154) in the direction both of the push rod and of the second seat, this second ball being moved away from the second seat by the push rod and itself moving the first ball away from the first seat when a relatively low pressure prevails in the second chamber, and the distance separating the two balls, when they are applied to their respective seats, being less than the possible sliding travel of the piston in the bore.

2. Brake regulator according to Claim 1, characterized in that the second spring (154) is compressed between the two balls and in that the two springs exhibit different stiffnesses, the stiffness of the second spring (154) being less than that of the first (153).

3. Brake regulator according to Claim 1 or 2, characterized in that the second ball (152) exhibits a diameter less than the diameter of the first ball (151).
